# EUROPEAN PATENT APPLICATION

(11) **EP 1 739 579 A1**
(43) Date of publication of application: **03.01.2007**
(21) Application number: 06115644.4
(22) Date of filing: 19.06.2006
(51) Int. Cl.: G06F 17/30

(54) **File accessing method, specific image file playback method, and camera apparatus capable of playing back the image file**

(30) Priority: 30.06.2005 JP 2005191735
(71) Applicant: KABUSHIKI KAISHA TOSHIBA, Tokyo 105-8001 (JP)
(72) Inventor: Ikehata, Tatsuhiko c/o Toshiba Corporation, Tokyo,105-8001 (JP); Abe, Tatsuro c/o Toshiba Corporation, Tokyo,105-8001 (JP); Tashiro, Kei c/o Toshiba Corporation, Tokyo,105-8001 (JP); Hagiwara, Tsuyoshi c/o Toshiba Corporation, Tokyo,105-8001 (JP); Nagaoka, Shiro c/o Toshiba Corporation, Tokyo,105-8001 (JP)
(74) Representative: Henkel, Feiler & Hänzel

(57) **Abstract**

One embodiment of an invention provides a method of creating a database of positions of file management information, or start positions of file data of each file, in a file system, and an apparatus configured to realize the method. According to an embodiment of the invention, the existence of an image file indicated in a specific file format is searched according to file management information indicating file formats, when playback of an image is instructed, and the management information is stored in a database when the existence of management information expressed in a specific format is searched. Information which indicates a record start position of an image file in a recording unit, given the management information of a higher-order folder including the stored management information, is stored in a database.

## Description

One embodiment of the invention relates to a method of accessing a still image file, and in particular to a method of playing back a specific image file from a large amount of image files stored in a large capacity recording medium, and a camera apparatus capable of playing back the image file.

A file name is commonly used for accessing file data. Namely, in most cases of accessing file data, a file is retrieved by specifying a file name in software for managing a file system.

Software for managing a file system generally compares a specified file name with a list of file management information, and obtains a record start position of file data from an identified file name, and starts accessing to that file data.

It is disclosed by, for example, Japanese Patent Application Publication (KOKAI) No. 2001-43231 discloses an electronic filing system improved in operability by visual and easy display of file storage positions to the user when searching files stored and managed hierarchically.

Recently, a large capacity storage device represented by a large capacity hard disc unit has become popular. Such a storage device can save several ten thousands to hundred thousands still image files.

For example, when ten thousands image files and related information (files) are recorded in one holder, at least ten thousands file names must be searched to obtain management information of a file recorded in the rear of a file management information list by the method of accessing files by specifying a file name. This takes much time to access file data.

In a still image viewing (playback) apparatus, continuous access to recorded image files is supposed. However, the relationship between files is unknown in the file name specifying method, and the list of file management information must always be searched from the beginning. This requires repetition of reading the data of the file management information list from a storage device, and the processing time and power consumption are increased.

The user of a still image viewing apparatus wants to view images speedily when selecting an object image (file) from a large number of images (file), as the number of recorded image is increased. But, actually, the processing speed is decreased.

An object of the invention is to provide an image file in a recording unit, given the management information of a higher-order folder including the stored management information, is stored in a database.

According to an aspect of the invention, there is provided an image playback method characterized by comprising:
specifying an image data name of a playback object according to a file format given to image data, when playing back image data stored in a data storage holding image data;
storing an image data name of a specified image data in a database holding a list of playback data;
storing access destination information including an image data name of a specified image data in the database; and
reading the stored access destination information from the database, and playing back image data of a specified image data name, when playback of image data of a specified image data name is instructed.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an exemplary diagram showing an example of a camera apparatus (file viewing apparatus) in accordance with an embodiment of the invention;
FIG. 2 is an exemplary diagram showing an example of a database for playing back images in accordance with an embodiment of the camera apparatus shown in FIG. 1;
FIG. 3 is an exemplary diagram showing an example of a database for playing back images in accordance with an embodiment of the camera apparatus shown in FIG. 1; and
FIG. 4 is a flowchart showing an exemplary embodiment of a database creating method.

An embodiment of the invention will be explained in detail hereinafter with reference to the accompanying drawings. A digital camera apparatus having a large capacity hard disc unit is taken as an example of embodiment.

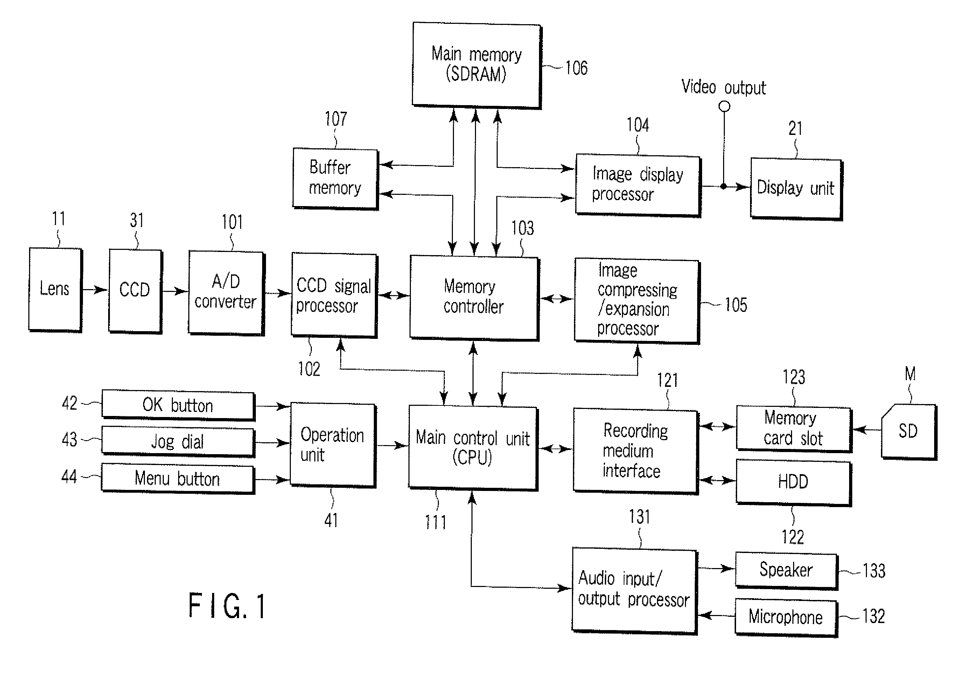

According to an embodiment, FIG. 1 shows an example of a digital camera apparatus according to an embodiment of the invention.

An object image taken in through a lens 11 of a digital camera apparatus 1 is focused on the image-forming surface of an image pickup element 31, and converted to an analog signal (object image). The object image is converted to an electric signal based on light and shade by the image pickup element (hereinafter called a CCD sensor) 31, and converted to a digital signal in a converter 101, and input to a signal processor 102.

The signal processor 102 performs gamma correction, color signal separation or white balance adjustment for the image data converted from an object image to a digital signal in an A/D converter 101.

The pickup image data output from the signal processor 102 is supplied to an image display processor 104 through a memory controller 103. The image display processor 104 includes a video interface (video I/F), and an D (On Screen Display) processor, and a video decoder, though not described in detail, and generates an image signal for display output, or a video signal. The output of the image display processor 104 is displayed in a display unit 21 that is an LCD panel, for example, through a liquid crystal panel driving circuit not described in detail. The output of the image display processor 104 may be output to a video output (terminal) for an external unit.

The pickup image data from the signal processor 102 is compressed by an image compression/expansion processor (encoder/decoder) 105, and recorded in a recording area of a predetermined recorder/recording medium according to the control of a main control unit (CPU) 111. The image compression/expansion processor 105 compresses a still image according to the known JPEG standard, and a video picture (not a still image) according to the known MPEG standard.

The main control unit (CPU) 111 is connected with a hard disc unit (hereinafter called a HDD) incorporated with a hard disc (not shown) give a recording capacity capable of holding about ten thousands still images, through a recording medium controller 121. The capacity of the HDD 122 depends on a compression rate (picture quality), and is capable of recording several ten hours of video picture with a normal picture quality, and the above number of still images.

The main control unit (CPU) 111 is connected with a memory card slot 123 capable of transferring image data with a removable recording medium such as nonvolatile semiconductor memory or a card medium M, through the recording medium controller 121. As a card medium M, various media such as a semiconductor memory called a SD card and mini-SD (registered trademark), and media of similar standards/recording methods can be used.

The main control unit (CPU) 111 is further connected with an audio input/output processor 131, and is capable of processing audio and sound (non-audio) data, other than image data, corresponding to an image picked up by the CCD 31. The audio/sound data taken together with a picked-up image data (or added at the time of editing, though not described in detail) is associated with the image data, and held in a predetermined recording area by a known recording method represented by WAV, AC-3 or linear PCM.

When an image is played back, or when image data held in the hard disk in the HDD 122 or the card medium M is displayed, the image data read from the HDD 122 or card medium M is expanded in the image compression/expansion processor 105, supplied to the image display processor 104 through the memory controller 103, and displayed in the display unit 21, for example.

When the image data recorded in the HDD 122 or card medium M is played back, a known thumbnail display is possible with increased retrievability by displaying several reduced images.

As a function combined with the functions of playback and recording, the known edition and change of playback order are possible.

In creation of thumbnail images, edition in an edit mode and change of an image file order, image data is transferred between the memory controller 103 and a main memory (memory circuit, such as SDRAM) connected to the memory controller 103 or a buffer (work) memory 107, though not described in detail, and a reduced image is created.

The buffer memory 107 can temporarily hold image data of at least one screen. The buffer memory 107 is also used when copying or transferring a part or all of the image data recorded in the HDD 122 to the card medium (memory card) M. The image data saved in the buffer memory 107, or the created reduced images, or the image during edition are displayed in the display unit 21 through the image display processor 104, and they can be sequentially monitored (the state of editing an image can be confirmed).

The camera apparatus 1 can take in sound/audio data from a microphone 132 connected to the audio input/output processor 131 or an audio input (Audio in) terminal, at the time of editing or photographing. The sound/audio data is associated with the pickup image data, or an image file, and recorded in the HDD 122 or in an area of the card medium M.

When an image (still or video picture) is played back, the sound/audio data recorded associated with an image file is read in association with the picked up image data, and output to a speaker 133 or an audio output (Audio Out) terminal. The sound/audio data output from the speaker 133 can also be silenced (set the output level to "0").

The not-shown apparatus body of the camera apparatus 1 is provided with an operation unit 41 capable of supplying (inputting) the main control unit 111 with control signals for selection of operation mode, image/mode in playback/edition, and start (On)/stop (Off) of recording, according to the operation by the user.

The operation unit 41 is provided with an OK (set) button 42 to input control signals to instruct start and stop of recording, a jog dial 43 used to select an image in playback/edition or a mode in edition, and a menu button 44 used to display a menu screen to input control signals for selection of an operation mode selected by the jog dial 43.

The jog dial 43 and OK button 42 permits smooth selection of modes and images/titles. (The jog dial 43 is useful as a switch with high operability when searching and specifying many images and titles.) The contents input from the jog dial 43 (by the user's operation), the operation states of the camera apparatus 1, and the display of the menu screen by the menu button 44 are synthesized through the CPU 111 as a main control unit, memory circuit 106 and image display processor 104 (and a not-shown video interface and OSD processor), and displayed in the LCD (display unit) 21.

The OK button 42 gives the CPU 111 the information (ON signal) that the button 42 is pressed. Based on the information (On of the OK button 42), the CPU 111 determines an image/title or a mode selected by the jog dial 43, and plays back the selected image or sets the selected mode. The signal input from the OK button 42 to the CPU 111 is the information (ON signal) that the button 42 is pressed. Depending on the judgment of the CPU 111 based on the number of input signals and current operation state, the recording (shooting a video picture) is started by turning on the OK button 42 in the standby state that the main power is turned on by a not-shown main switch, and stopped by turning on again the OK button 42.

The OK button 42 is also used to input a set signal to determine the operation or mode defined by GUI (Graphical User Interface), such as an icon or display bar displayed in reverse by the operation of the jog dial 43, in the state that the menu screen is displayed in the display unit 21. The jog dial 43 gives the CPU 111 the rotation angle and speed information. The CPU 111 can control the speed of displaying the next image or GUI, based on the information.

The OK button 42 is placed coaxially (concentrically) with the center of rotation of the jog dial 43, for example. When the OK button 42 is pressed (by the user) at substantially the center (in the axial direction), the ON signal can be input. When the OK button 42 is pressed in one of the four equally divided directions of the circumference (generally called "UP/DOWN/LEFT/RIGHT"), a control command (instruction) can be input to scroll an image displayed in the display unit 21 in the pressed direction (one of the four directions wanted by the user).

The HDD 122 as a recording medium has the capacity of recording several thousands to several ten thousands still images. Thus, a high speed is required to feed and reverse the recorded images and titles.

A still image taken by the camera apparatus 1 is recorded in the memory card (card medium) M as a recording device or a not-shown hard disc built in the HDD 122, as a file system based on FAT (File Allocation Table) system in this embodiment as already explained.

A folder named DCIM is formed as a root directory for a file to hold a recorded image according to the DCF standard, and a file is recorded as IMG_0001. JPG, for example, in 899 subfolders numbers of, for example, 100 to 999, like "100 PHOTO" and "101 PHOTO". An actual still image file is given a sequential file number, like "IMG_0001. JPG" and "IMG_0002. JPG" for each subfolder. A maximum of 9999 still images is recorded up to "TMG_9999. JPG". When adding audio information to a still image, create a file like "IMG_0001. WAV" with the same name as a still image and a different extension.

One file is given 32-byte file management information, in the FAT file system, including:
· File name ... ("IMG_**** (****: numerals)")
· Extension name ... ("JPG", "WAV")
· File attribute ... ("FULE")
· File creation date ... ("YY, MM, DD, hh, mm, ss": "Year", "Month", "Day", Hour", "Minute", "Second")
· Start cluster No. ... ("####(####: Numerals)")
· File size ... "++++KB(++++: Numerals)").

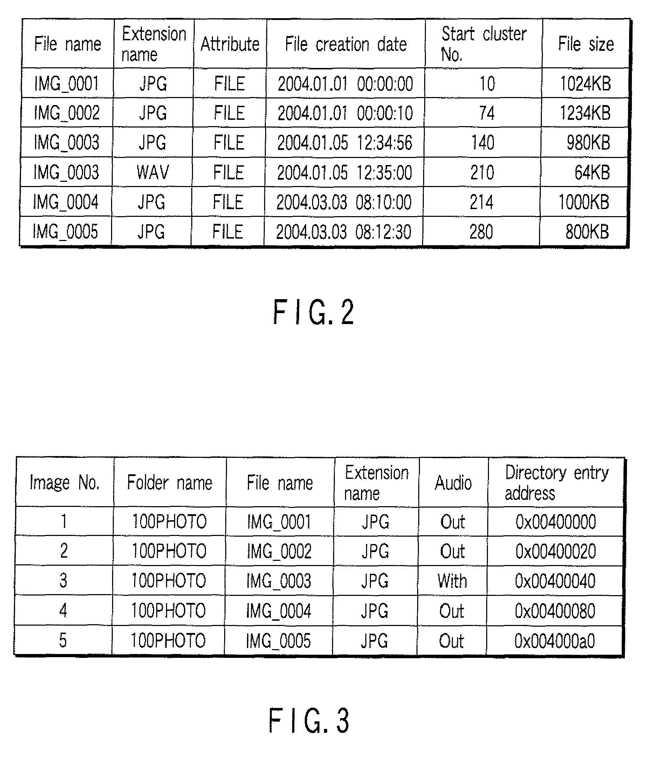

FIG. 2 shows an example of directory entry list.

As a taken still image is stored in a file with a serial number to prevent overlap of a file name, actual image data is written in an optional recording unit that is the HDD 122, or in a predetermined area of the memory card M, together with the directory entry list information added to the end of the directory entry list together.

The directory entry list information is divided into a capacity unit called a cluster and recorded in the FAT file system. Thus, the directory entry list of the size larger than the cluster unit is recorded in a scattered address area in a recording unit.

Contrarily, when playing back a still image, whether a subfolder corresponding to the format "***PHOTO" (***: numerals) exists in the "DCIM" folder is usually checked. When it exists, the directory entry list is begun to be search in the subfolder (the directory entry list is searched).

In the searching of the directory entry list in the subfolder, the file name and extension name of each directory entry are compared first. In this case, the file name "IMG_****" (***: numerals) and extension name ". JPG" indicating an JPEG image are compared, and when they are identified, the subfolder name and file name are stored in a database as an playback image. In this embodiment, the address information describing a directory entry identified (searched) by the comparison of the directory entry is also stored in the database at the same time. Instead of the address information describing the directory entry, the record destination information in the recording medium storing the image file of a playback object (the first address of the image file in the HDD 122, or in the card medium M) may be stored.

When the searching of the directory entry list is finished for the directory entry list of all subfolders is finished, a playback image database is created.

When actually playing back an image, access the file data of that image by using the created playback image database.

In most recording units and camera apparatus, a file is searched by using a folder name and file name stored in a database.

Concretely, compare the directory entry list and subdirectory name read from a recording unit, search the address describing the directory entry list of the identified subdirectory, read the directory entry list from that address in a recording unit, and compare a file name and extension name with the directory list.

As described above, the directory entry list is recorded in units of cluster size and scattered in a recording unit. Thus, for example, when a file of 10,000^{th} directory entry has a cluster size of 16KB, one cluster includes 16384/32 = 512 directory entries, and a scattered directory entry list equivalent to 10,000/512 = 19 clusters is read.

This means that a directory list entry of larger than 300KB must be compared with a character string by 10,000 times to access (search) the files one by one. Particularly, in many camera apparatus, an image taken last is set to be played back first, and the above access is repeated by many times when searching a file of an image taken long time before or the recorded time is unknown.

This means that accessing is a heavy-load process requiring very long time and large power consumption in a recording medium that is large in the recording capacity but high in the latency in the access to scattered data, such as the HDD 122.

FIG. 3 shows an example of a database of a playback image created when a playback image file is selected, characterized by the embodiment.

The database for a playback image shown in FIG. 3 is a database of address information describing a directory entry found on searching, including the following information for each optional image file in the FAT file system:
· Image No.... ("abc (abc: numerals)")
· Folder name ... ("YYYPHOTO (YYY: numerals)")
· File ... ("IMG **** (****: numerals)")
· Extension name ... ("JPG", "EAV")
· Audio information ... ("1", "0", "1": Yes)
· Directory entry address ... ("0x00u000v0w0 ("x", "u", "v", "w", each corresponds to optional numbers").

Instead of the address information describing the directory entry, the record destination information in the recording medium storing the playback image file (the first address of the image file in the HDD 122 or card medium M) may be stored.

Namely, when playing back an image by using the database shown in FIG. 3, access the address describing a directory entry (or a first address of an image file), and obtain the address information of the directory entry recording that playback image. Therefore, accessing a recording unit is limited to the least 1 sector 512 bytes, and it is unnecessary to compare a folder name and file name. Therefore, once a database is constructed, the time required for searching is substantially unnecessary, and a desired file can be accessed in shortest time.

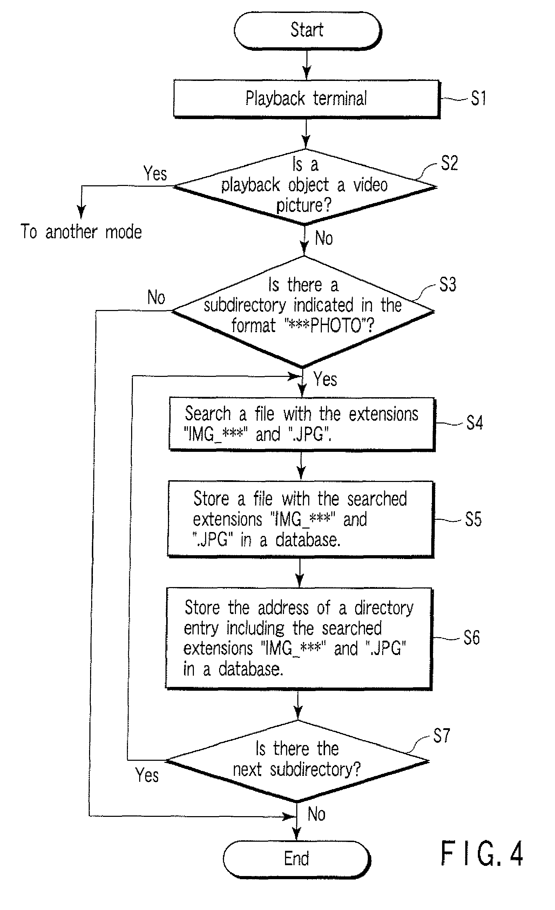

FIG. 4 shows an example of a method of creating a database for a playback image shown in FIG. 3. The method of FIG. 4 is just an example, and not limited to this form (drawing) as long as the same database can be obtained.

As shown in FIG. 4, when playback of a recorded image is instructed (S1), whether the object image is a still image or a video picture is checked (S2).

When it is detected that the object (playback) image is a still image in step S2 (S2-No), whether a subfolder "***PHOTO (***: numerals)" exits in a subfolder of "DCIM" folder as a root directory is checked (S3).

When it is detected that the subfolder "*** PHOTO (***: numerals)" exists in step S3 (S3-Yes), the directory entry of the detected subfolder is began to be searched. The file name and extension name of the directory entry are compared first in a predetermined order, and the file name "IMG_**** (****: numerals)" and extension name ". JPG" indicating a JPEG still image are compared (S4).

When it is detected that the identified directory entry exists (a specific directory entry is searched) in the comparison in step DS4, the subfolder name and file name of that directory entry are stored in the database (S5).

Then, the address of the directory entry including the subfolder name and file name searched in step S5 is listed in the database (the address of the directory entry is stored in the database, S6). Namely, this embodiment is characterized by that the address information describing the directory entry searched (identified) by comparing the directory entry is also stored in the database.

Thereafter, the comparing a directory entry in step S4 is repeated until the searching of the directory entry lists of all subfolder is finished (repeating S7 = S4 to S6).

The directory entry searched in step S7 (identified by comparing each subfolder name and file name) is written (listed) in the database for a playback image, whenever it is searched.

The database including the result of comparing the directory entry can be saved (recorded) to be identified by a date, for example, in a predetermined area of HDD 122, when instructed (desired) by the user. Namely, by holding the database of this embodiment including the directory entry comparing result after turning off the main power of the camera apparatus 1, the time required to create a database for the next playback can be decreased.

The database including the result of comparing the directory entry may be created only when a specific recording medium having the capacity larger than a predetermined size (capacity), such as HDD 122 is specified (selected) as an image data recording medium (the setting can also by optionally changed by the user's operation).

The database including the result of comparing the directory entry according to this embodiment may be executed (realized) according to the program stored as an application or a similar function in the HDD 122, for example.

The program is not necessarily prepared in the camera apparatus 1. It may be supplied as a CD-ROM to be installed (recorded and initialized in the HDD 122) by a not-shown personal computer, or externally available (from the home page of the supplier of the camera apparatus 1) by connecting LAN (Local Area Network) through a connection terminal of a not-shown network.

As described hereinbefore, by using one embodiment of the invention, direct access to a file or access to a position recording a file in a recording unit is possible when playing back an image, according to the information indicating the start position of file data of a playback file previously recorded in a database, or the information indicating whether file management information of the object file is recorded in a recording unit. This makes it possible to playback an object file regardless of the number of image files. Therefore, even if a large number of images is saved, a desired file can be viewed without affecting the operability with substantially no latency time. This decreases useless reading of a file management information list in a storage device, and the power consumption is decreased.

For example, a camera apparatus is taken as an example in the detailed description of the invention. An embodiment is not limited to a camera apparatus, and may not be integrated with a display unit. The invention may be embodied in a desktop video recording/playback apparatus, for example.

## Claims

1. An image playback method **characterized by** comprising:
specifying an image data name of a playback object according to a file format given to image data, when playing back image data stored in a data storage holding image data;
storing an image data name of a specified image data in a database holding a list of playback data;
storing access destination information including an image data name of a specified image data in the database; and
reading the stored access destination information from the database, and playing back image data of a specified image data name, when playback of image data of a specified image data name is instructed.

2. An image playback method **characterized by** comprising:
specifying an image data name of a playback object according to a file format given to image data, when playing back image data stored in a data storage holding image data;
storing an image data name of a specified image data in a database holding a list of playback data;
storing an address (a record start position of image data) of an access destination including an image data name of a specified image data recorded in a data storage, in the database; and
reading the stored address from the database, and playing back image data of a specified image data name, when playback of image data of a specified image data name is instructed.

3. A file accessing method **characterized by** comprising:
creating a database by previously searching a record position of each file in a file system;
referring to record position data of file management information held in the database, when accessing a specific file;
obtaining file management information directly from the record position data; and
accessing file data based on the file management information.

4. A file accessing method **characterized by** comprising:
creating a database by previously searching a record position of each file in a file system;
referring to record position data of file management information held in the database, when accessing a specific file; and
accessing directly the referred data record start position data.

5. A camera apparatus **characterized by** comprising:
a recording unit (121, 122) which holds taken image information as an image data file; and
a control (111) unit which creates a database for playing back a specific image, based on a file name of an image data file held in the recording unit,
wherein the control unit is configured to create the database for playback by specifying an image data name of a playback object according to a file format given to an image data file held in the recording unit, storing an image data name of a specified image data in the database, and storing access destination information including an image data name of a specified image data in the database.

6. A camera apparatus **characterized by** comprising:
a recording unit (121, 122) which holds taken image information as an image data file; and
a control unit (111) which creates a database for playing back a specific image, based on a file name of an image data file held in the recording unit,
wherein the control unit is configured to create the database for playback by specifying an image data name of a playback object according to a file format given to an image data file held in the recording unit, storing an image data name of a specified image data in the database, and storing an address (a record start position of image data) of an access destination including an image data name of a specified image data recorded in a data storage, in the database.

7. A file database creating method **characterized by** comprising:
checking whether a playback object image is a still image or a video picture at the time that playback of a recorded image is instructed;
searching the existence of an image file indicated in a specified file format for a still image, according to file management information indicating a file format;
storing management information in a database, when the existence of file management information indicated in a specified file format is searched; and
storing information indicating a record start position of an image file in a recording unit, given the management information in an upper-order folder including the stored management information.

8. A file viewing apparatus **characterized by** comprising:
a reading means (111, 103, 121) which reads a type or contents of a file recorded in a storage device, by searching a list of file management information;
a creating means (103, 121) which creates a database of an object image specified by the grasping means;
a recording means (121, 122) which records information indicating a position of file management information recorded in a storage device, in the image database created by the creating means;
an accessing means (111, 103) which accesses by directly specifying a recorded position of file management information of a playback object file recorded in a database, when an image is displayed; and
a file playback means (105, 103, 111) which reads a data start position of a file by using file management information, accesses data of a playback object file, and plays back an object file.

9. A file viewing apparatus **characterized by** comprising:
a reading means (111, 103, 121) which reads a type or contents of a file recorded in a storage device, by searching a list of file management information;
a creating means (103, 121) which creates a database of an object image specified by the grasping means;
a recording means (121, 122) which records information indicating a position of file management information recorded in a storage device, in the image database created by the creating means;
an accessing means (111, 103) which accesses by directly specifying a recorded position of file management information of a playback object file recorded in the database, when an image is displayed; and
a file playback means (105, 103, 111) which reads data by accessing a start position of file data, and plays back an object file.
